# EUROPÄISCHE PATENTSCHRIFT

(11) **EP 4 286 804 B1**
(45) Veröffentlichungstag und Bekanntmachung des Hinweises auf die Patenterteilung: **31.07.2024**
(21) Anmeldenummer: 22176873.2
(22) Anmeldetag: 01.06.2022
(51) Int. Cl.: G01G 23/01, G01G 19/414

(54) **LADENWAAGE**
LOAD SCALES
BALANCE DE MAGASIN

(43) Veröffentlichungstag der Anmeldung: 06.12.2023
(73) Patentinhaber: Bizerba SE & Co. KG, 72336 Balingen (DE)
(72) Erfinder: Dietmann, Bernhard, 72415 Grosselfingen (DE)
(74) Vertreter: Huber, Meik

(56) Entgegenhaltungen:
- EP-B1- 3 370 044
- CN-A- 113 465 718
- CN-U- 206 920 004

## Beschreibung

Die vorliegende Erfindung betrifft eine Waage, insbesondere eine Ladenwaage, mit einem Wägemodul. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden und der bewegliche Abschnitt trägt ein Lastkreuz mit einer Lastplatte. Der Verformungsabschnitt weist einen Dehnungsmesstreifen zur Messung eines auf die Lastplatte wirkenden Gewichts auf.

Derartige Waagen sind dem Fachmann gut bekannt. Diese Waagen unterliegen dem Eichgesetz, das heißt, durch die Einhaltung der Eichvorschriften ist deren Genauigkeit garantiert. Insofern müssen eichrelevante Daten in einem Speicher der Waage manipulationssicher gespeichert sein. Eine Manipulation dieser Daten darf nur dann möglich sein, wenn dabei ein Eichsiegel, das heißt, eine Eichmarke verletzt wird und dies durch eine einfache Überprüfung, zum Beispiel durch das Öffnen des Wagengehäuses durch die Abnahme einer Lastplatte, überprüfbar ist. Jede Änderung an der Waage, die ggf. zu einer eichrelevanten Veränderung der Charakteristik der Waage führt, muss mit einer oder ggf. auch mehreren Eichmarken nachvollziehbar sein. Hierzu gehört auch der Austausch der Wägezelle.

Eine Wägezelle mit einer Sicherung der eichrelevanten Elektronik ist zum Beispiel aus der EP3370044B1 bekannt.

Aufgabe der Erfindung ist es, eine Ladenwaage zu schaffen, bei der auf einfache Weise überprüft werden kann, dass keine eichrelevanten Änderungen an der Waage vorgenommen wurden.

Diese Aufgabe wird durch eine Waage mit den Merkmalen des Anspruchs 1 gelöst.

Erfindungsgemäß wird eine Waage, insbesondere eine Ladenwaage, mit einem Wägemodul vorgeschlagen. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden. In einer Ausführungsform ist der feste Abschnitt mit dem Gehäuse verschraubt. In einer Ausführungsform ist der feste Abschnitt mit zwei oder mit vier Schrauben mit dem Gehäuse verschraubt. Der bewegliche Abschnitt trägt ein Lastkreuz. Das Gehäuse ist im Bereich der Wägezelle nach oben hin offen. Das Lastkreuz trägt eine Lastplatte. Das Gehäuse ist durch die Lastplatte und durch die nach unten über den oberen Rand des Gehäuses ragenden Ränder der Lastplatte geschlossen. Der Verformungsabschnitt der Wägezelle weist mindestens einen Dehnungsmesstreifen zur Messung eines auf die Lastplatte wirkenden Gewichts auf. Am festen Abschnitt der Wägezelle ist eine Leiterplatte mit einer Elektronik zur Verarbeitung des Signals des mindestens einen Dehnungsmessstreifens angebracht. Die Elektronik umfasst einen Speicher, in dem eichrelevanten Daten, insbesondere Kalibrierungsdaten, der Wägezelle und/oder ein Wert für die Erdbeschleunigung gespeichert sind. Dies sind Daten, die gemäß dem Eichgesetz gegen Manipulation gesichert sein müssen. Bei der Veränderung dieser Daten muss die Eichmarke zerstört werden, um die Änderung sichtbar zu machen. Anders ausgedrückt dürfen nach dem Eichgesetz diese Daten nicht änderbar sein, ohne dabei zwingend die Eichmarke zu zerstören. Die Waage umfasst eine erste abnehmbare Abdeckung, die mittels eines ersten Befestigungselements an dem festen Abschnitt der Wägezelle befestigt ist. In einer Ausführungsform ist das erste Befestigungselement eine erste Befestigungsschraube. Dabei ist das erste Befestigungselement, insbesondere die erste Befestigungsschraube, durch eine Eichmarke gesichert. Die erste abnehmbare Abdeckung schützt den Speicher der Leiterplatte gegen die Manipulation von eichrelevanten Daten. In einer Ausführungsform deckt die erste abnehmbare Abdeckung eine Hardwareschnittstelle ab, die zur Änderung der eichrelevanten Daten geeignet ist.

In einer Ausführungsform ist die Wägezelle mit mindestens einem zweiten Befestigungselement mit ihrem festen Abschnitt am Gehäuse des Wägemoduls befestigt. In einer Ausführungsform ist die Wägezelle mit mindestens einer zweiten Befestigungsschraube mit ihrem festen Abschnitt am Gehäuse des Wägemoduls befestigt. In einer Ausführungsform ist die Wägezelle mit zwei zweiten Befestigungsschrauben mit ihrem festen Abschnitt am Gehäuse des Wägemoduls befestigt. In einer Ausführungsform ist die Wägezelle mit vier zweiten Befestigungsschrauben mit ihrem festen Abschnitt am Gehäuse des Wägemoduls befestigt. Das mindestens eine zweite Befestigungselement, insbesondere die mindestens eine zweite Befestigungsschraube, ist durch eine zweite abnehmbare Abdeckung abgedeckt. Das mindestens eine zweite Befestigungselement, insbesondere die mindestens eine zweite Befestigungsschraube, ist von außerhalb des Gehäuses zugänglich und lösbar, falls die zweite abnehmbare Abdeckung abgenommen ist. In anderen Worten heißt das, wird die zweite abnehmbare Abdeckung entfernt, so ist das mindestens eine zweite Befestigungselement an der Gehäuseaußenseite des Wägemoduls zugänglich und kann gelöst werden. Ist das mindestens eine zweite Befestigungselement mindestens eine zweite Befestigungsschraube, so ist der bzw. die Schraubenköpfe nach Abnahme der zweiten Abdeckung von außen am Gehäuse des Wägemoduls zugänglich und lösbar.

In einer Ausführungsform ist die zweite abnehmbare Abdeckung durch ein drittes Befestigungselement innerhalb des Gehäuses am Gehäuse des Wägemoduls oder am festen Abschnitt der Wägezelle befestigt. In einer Ausführungsform ist das dritte Befestigungselement eine dritte Befestigungsschraube.

In einer Ausführungsform deckt die erste abnehmbare Abdeckung das dritte Befestigungselement, insbesondere die dritte Befestigungsschraube, derart ab, dass das dritte Befestigungselement, insbesondere die dritte Befestigungsschraube, nicht gelöst werden kann, wenn die erste abnehmbare Abdeckung nicht abgenommen ist. Das heißt, erst nachdem die erste abnehmbare Abdeckung abgenommen wurde, kann das dritte Befestigungselement gelöst werden.

In einer Ausführungsform ist das mindestens eine zweite Befestigungselement, insbesondere die mindestens eine zweite Befestigungsschraube, auf einer Unterseite des Gehäuses des Wägemoduls in einer Vertiefung angebracht und durchdringt das Gehäuse des Wägemoduls durch eine Durchgangsöffnung. Die zweite abnehmbare Abdeckung ist in der Vertiefung angebracht, wenn sie durch das dritte Befestigungselement am Gehäuse des Wägemoduls oder am festen Abschnitt der Wägezelle befestigt ist.

In einer Ausführungsform besteht die zweite abnehmbare Abdeckung aus einer flachen Platte, an der ein längliches, insbesondere ein zylindrisches, Halteelement angebracht ist. Das längliche, insbesondere das zylindrische, Halteelement der zweiten abnehmbaren Abdeckung ist in einem montierten Zustand in einer rohrförmigen Öffnung des Gehäuses des Wägemoduls angebracht. Das längliche, insbesondere das zylindrische, Halteelement ist mit der dritten Befestigungsschraube an der rohrförmigen Öffnung fixiert.

In einer Ausführungsform ist die dritte Befestigungsschraube longitudinal in das zylindrische Halteelement der zweiten abnehmbaren Abdeckung geschraubt. Das heißt, die Achse der dritten Befestigungsschraube und die Achse des zylindrischen Halteelements verlaufen parallel und stimmen insbesondere überein. Der Schraubenkopf der dritten Befestigungsschraube weist einen Durchmesser auf, der größer ist als der Durchmesser der rohrförmigen Öffnung des Gehäuses des Wägemoduls. Durch den Schraubenkopf wird ein Herausziehen des zylindrischen Halteelements aus der rohrförmigen Öffnung verhindert.

In einer Ausführungsform weist der feste Abschnitt oberseitig eine Vertiefung auf, in die die Leiterplatte horizontal eingesetzt ist. Die Vertiefung ist zu dem Ende des festen Abschnitts, das heißt, zum kraftaufnahmeseitigen Ende der Wägezelle hin, offen. Die erste abnehmbare Abdeckung ist von oben auf die Vertiefung des festen Abschnitts aufgesetzt und deckt die Vertiefung und die Leiterplatte zumindest teilweise ab. Insbesondere deckt die erste abnehmbare Abdeckung die Vertiefung und die Leiterplatte so ab, dass die Elektronik der zur Verarbeitung des Signals des mindestens einen Dehnungsmessstreifens und/oder der Speicher mit den eichrelevanten Daten und ggf. eine Hardware-Schnittstelle zur Zugriff auf den Speicher nur nach Abnahme der ersten abnehmbaren Abdeckung zugänglich sind.

In einer Ausführungsform ist die erste abnehmbare Abdeckung als plattenförmige Struktur ausgebildet, die zumindest teilweise auf dem festen Abschnitt der Wägezelle aufgebacht ist. Die erste abnehmbare Abdeckung weist einen Fortsatz auf, der das dritte Befestigungselement, insbesondere den Schraubenkopf der dritten Befestigungsschraube, oberseitig abdeckt. In einer Ausführungsform ist der Schraubenkopf der dritten Befestigungsschraube neben dem festen Abschnitt der Wägezelle angeordnet, so dass der Fortsatz über den Grundkörper der ersten abnehmbaren Abdeckung hinausragt und insbesondere der Fortsatz durch eine Z-förmige Ausbildung höhenversetzt zur plattenförmigen Struktur und in der Höhe nahe der Oberseite des Schraubenkopfes der dritten Befestigungsschraube angeordnet ist.

In einer Ausführungsform ist das mindestens eine zweite Befestigungselement, insbesondere die mindestens eine zweite Befestigungsschraube, nicht durch eine separate Eichmarke gesichert. In einer Ausführungsform ist das dritte Befestigungselement, insbesondere die dritte Befestigungsschraube, nicht durch eine separate Eichmarke gesichert.

In einer Ausführungsform ist an der Leiterplatte eine Hardware-Schnittstelle vorgesehen, über die der Speicher zugreifbar ist und über die die in dem Speicher gespeicherten Kalibrierungsdaten und/oder der Wert für die Erdbeschleunigung änderbar sind. Ein elektronischer Schreibschutz ist für den Speicher vorgesehen. Die Elektronik umfasst eine Schalteinrichtung, um den Schreibschutz des Speichers zu deaktivieren. Die Schalteinrichtung kann nur nach Entnahme des ersten Befestigungselement, insbesondere der ersten Befestigungsschraube, und/oder nach Abnahme der ersten abnehmbaren Abdeckung betätigt werden. So kann der Schreibschutz deaktiviert werden.

In einer Ausführungsform handelt es sich bei der Schalteinrichtung um einen Sensor, der dazu ausgebildet ist, ein Entfernen des ersten Befestigungselements aus seiner befestigten Stellung, insbesondere ein Herausschrauben der ersten Befestigungsschraube, zu erfassen und nach Erfassen eines Entfernens des ersten Befestigungselements ein Schaltsignal auszugeben, um den Schreibschutz des Speichers zu deaktivieren. In einer Ausführungsform wird beim Entfernen des ersten Befestigungselements zwingend die Eichmarke verletzt. Das heißt, beim Entfernen des ersten Befestigungselements wird der Schreibzugriff auf den Speicher ermöglicht, indem der Schreibschutz des Speichers deaktiviert wird. Damit ist das Gerät nicht mehr geeicht, da nicht mehr nachvollzogen werden kann, ob die Daten in dem Speicher geändert wurden oder nicht und ob die Wägezelle durch Änderungen noch den Anforderungen des Eichgesetztes genügt. Durch die zwingende Verletzung der Eichmarke, wenn das erste Befestigungselement entfernt wird, was notwendig ist, um den Schreibschutz des Speichers zu deaktivieren, ist ersichtlich, dass sich das Gerät in einem ungeeichten Zustand befindet. In einer Ausführungsform ist es zwingend notwendig, das erste Befestigungselement zu entfernen, um ein Schaltsignal auszugeben, um den Schreibschutz des Speichers zu deaktivieren.

In einer Ausführungsform ist der Sensor eine Lichtschranke mit einem Sender und einem Empfänger, die derart angeordnet ist, dass der Strahlengang zwischen dem Sender und dem Empfänger unterbrochen ist, wenn sich das erste Befestigungselement in seiner befestigten Stellung befindet, und die dazu ausgebildet ist, ein Schaltsignal auszugeben, um den Schreibschutz des Speichers zu deaktivieren, wenn der Strahlengang zwischen dem Sender und dem Empfänger nicht mehr durch das erste Befestigungselement unterbrochen ist.

In einer Ausführungsform weist das Lastkreuz eine Ausnehmung auf, durch die die Eichmarke nach dem Öffnen des Gehäuses des Wägemoduls durch Abnahme der Lastplatte vom Lastkreuz sichtbar ist.

In einer Ausführungsform sind die Eichmarke und das erste Befestigungselement durch die Ausnehmung im Lastkreuz zugänglich und entfernbar. In einer Ausführungsform kann das erste Befestigungselement durch die Ausnehmung im Lastkreuz nach Entfernen der Eichmarke entfernt werden, ohne dass dabei die erste abnehmbare Abdeckung durch die Ausnehmung im Lastkreuz entfernt werden kann. Dies hat dennoch den Vorteil, dass so der Schreibzugriff auf den Speicher ermöglicht wird und dies durch die Verletzung der Eichmarke dokumentiert ist.

Einige Ausführungsformen der Erfindung sind in den Zeichnungen beispielhaft gezeigt und nachfolgend beschrieben. Es zeigen, jeweils in schematischer Darstellung:
- Fig. 1: Eine erfindungsgemäße Ladenwage,
- Fig. 2: Ein Wägemodul einer erfindungsgemäße Ladenwage,
- Fig. 3: Das Wägemodul ohne Lastkreuz einer erfindungsgemäße Ladenwage,
- Fig. 4: Das Wägemodul ohne Lastkreuz und ohne abnehmbare Abdeckung einer erfindungsgemäße Ladenwage,
- Fig. 5: Eine Schnittzeichnung des Wägemoduls einer erfindungsgemäße Ladenwage.

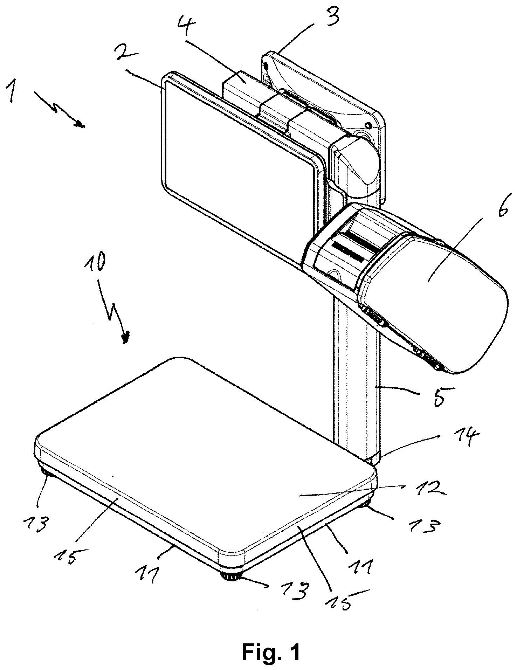

Fig. 1 zeigt eine erfindungsgemäße Ladenwaage 1. Die Ladenwaage 1 umfasst ein Wägemodul 10. Das Wägemodul 10 umfasst ein Gehäuse 11, welches zum Beispiel aus einer Gusslegierung hergestellt ist. Im Gehäuse 11 ist eine Wägezelle untergebracht, die über ein Lastkreuz eine Lastplatte 12 trägt. Die Lastplatte 12 besteht aus einem Blechteil mit nach unten ragenden Rändern 15, die über den oberen Rand des Gehäuses 11 ragen. Das nach oben hin offene Gehäuse 11 des Wägemoduls 10 ist durch die, auf dem Lastkreuz aufgelegte Lastplatte 12, geschlossen. So schützt die Lastplatte 12 das Gehäuseinnere des Wägemoduls 10 und die darin befindliche Wägezelle vor Schmutz und Umwelteinwirkungen. Über die Wägezelle wird das Gewicht eines auf der Lastplatte 12 aufgebrachten Gegenstandes bestimmt. Das Wägemodul 10 ist über Stellfüße 13 auf einer Tischplatte oder Theke abgestützt. Am Wägemodul 10 ist über eine Halterung 14 ein Stativ 5 angebracht. Das Stativ trägt ein, einem Bediener zugewandtes, Bedienerdisplay 2, das als Touchscreen ausgebildet ist und dem Bediener die Interaktion mit der Ladenwaage 1 erlaubt. Des Weiteren trägt das Stativ ein Kundendisplay 3, das beim Bedienverkauf einem Kunden zugewandt ist und ihm verschiedene Informationen, wie zum Beispiel Gewicht oder Preis einer aufgelegten Ware, deren Warenbezeichnung und weitere Zusatzinformationen oder Werbeinformationen anzeigt. Gegebenenfalls ist das Kundendisplay 3 ebenfalls als Touchscreen ausgebildet, so dass der Kunde ebenfalls mit der Ladenwaage 1 interagieren kann, sich zum Beispiel mit einem Kundenkonto anmelden kann, um Punkte für seinen aktuellen Kauf zu sammeln. Des Weiteren befindet sich am Stativ 5 ein Drucker 6, vorzugsweise ein Thermodirektdrucker, zum Ausdruck von Belegen für den Bedienverkauf. Zwischen Bedienerdisplay 2 und Kundendisplay 3 befindet sich eine CPU-Einheit 4, die die Elektronik zur Datenverarbeitung und zur Ansteuerung des Druckers 6 umfasst.

Im Gehäuse 11 des Wägemoduls 10 befindet sich ein Netzteil, das die Stromversorgung von Drucker 6 und CPU-Einheit 4 sowie der Displays 2, 3 sicherstellt. Die elektrischen Verbindungen zwischen den einzelnen Komponenten, wie Netzteil, Drucker 6, CPU-Einheit 4 und den Displays 2, 3 findet über Kabelverbindungen statt, wobei die Kabel vom Gehäuse 11 des Wägemoduls 10 über die Halterung 14 in das Stativ 5 geführt werden. Dabei verlaufen die Kabel innerhalb der Halterung 14 und innerhalb des Stativs 5 und über Öffnungen am Stativ direkt in Öffnungen des Druckers 6 und der CPU-Einheit 4, so dass die Kabel von außen nicht sichtbar sind. Somit stören die Kabel das Erscheinungsbild der Ladenwaage 1 nicht. Die Kabel sind als Standardkabel ausgebildet, vorzugsweise USB-C Kabel, so dass bei der Fertigung der Ladenwaage 1 auf kostengünstige und am Markt verfügbare Module zurückgegriffen werden kann. Dies ermöglicht ebenfalls, dass zum Beispiel das Kundendisplay 3 und das Bedienerdisplay 2, das Netzteil und weitere Komponenten am Markt verfügbare Standardmodule sein können, die untereinander über USB-C Kabel verbunden sind. Die Wägezelle und deren Elektronik, die Elektronik in der CPU-Einheit 4 und der Drucker 6 sind speziell für die Waage entwickelte und angepasste Module. Mit dieser Kombination aus Standardmodulen 2, 3, soweit verfügbar, und individuellen Modulen 4, 6 ist die Produktion einer kostengünstigen Ladenwaage 1 möglich. Ebenfalls ist eine große Flexibilität und Modularität, zum Beispiel durch den Austausch des Bedienerdisplays 2 oder des Kundendisplays 3 durch andere Displaygrößen möglich. Vorzugsweise unterstützen alle Module Plug-and-Play Funktionen über die USB-C Schnittstellen. Der Fachmann versteht, dass die USB-C Schnittstelle beispielhaft genannt ist, jedoch jede andere aktuell oder zukünftig verfügbare universelle Schnittstelle zur Herstellung einer standardisierten Kabelverbindungen zwischen den einzelnen Modulen möglich ist.

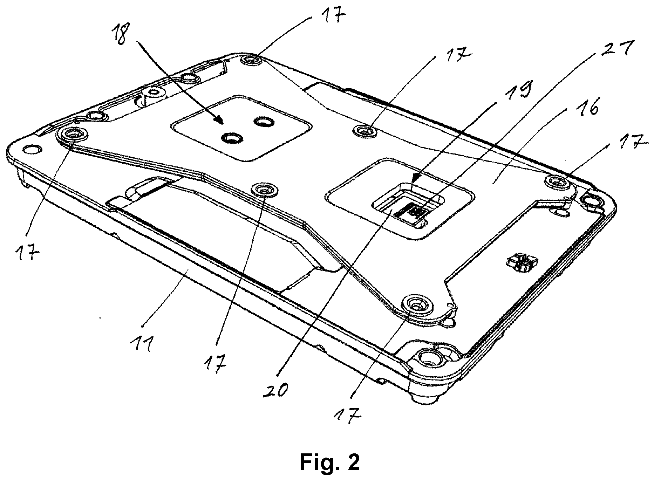

Fig. 2 zeigt das Wägemodul 10 mit abgenommener Lastplatte 12 in einer isometrischen Ansicht. Das Gehäuse 11 des Wägemoduls ist nach oben hin offen, wobei das Lastkreuz 16 über eine Befestigungseinrichtung 18 auf den beweglichen Abschnitt der Wägezelle geschraubt ist. Die Wägezelle im offenen Bereich des Gehäuses 11 ist in dieser Ansicht durch das Lastkreuz 16 verdeckt. Das Lastkreuz 16 wird über den beweglichen Abschnitt der Wägezelle freischwebend und in Richtung des Gehäuses 11 beweglich gehalten. Insbesondere bewegt sich das Lastkreuz 16 in Richtung des Gehäuses 11 des Wägemoduls 10, wenn eine Gewichtskraft auf das Lastkreuz 16 aufgebracht wird und führt zu einer Verformung des Verformungsabschnitts der Wägezelle. Dabei darf das Lastkreuz 16 das Gehäuse 11 des Wägemoduls 10 an keiner Stelle berühren, damit kein Kraftnebenschluss zwischen beweglichem Abschnitt und festem Abschnitt der Wägezelle entsteht. Hierdurch würde das Wiegeergebnis verfälscht werden. Das Lastkreuz 16 umfasst sechs Aufnahmepunkte 17, die die Lastplatte 12 tragen. Die Aufnahmepunkte 17 sind aus Gummivertiefungen ausgebildet, in denen die Lastplatte 12 mit an der Unterseite angebrachten passgenauen Metallbolzen auf die Aufnahmepunkte 17 aufgesteckt werden kann, so dass die Lastplatte 12 einen stabilen Halt auf dem Lastkreuz 16 hat, wenn das Gehäuse 11 durch die Lastplatte 12 geschlossen ist. Die Lastplatte 12 ist durch eine Bewegung nach oben vom Lastkreuz 16 abnehmbar, um das Wägemodul 10 zu öffnen. Das Lastkreuz 16 umfasst im Bereich des festen Abschnitts der Wägezelle eine Ausnehmung 19, durch diese auf die darunterliegende Wägezelle geblickt werden kann. Im Bereich der Ausnehmung 19 ist am festen Abschnitt der Wägezelle eine Leiterplatte mit einer Elektronik zur Verarbeitung des Signals von mindestens einem Dehnungsmesstreifen der Wägezelle. Diese Elektronik ist durch eine erste abnehmbare Abdeckung 20 abgedeckt. Die erste abnehmbare Abdeckung ist durch ein erstes Befestigungselement am festen Abschnitt der Wägezelle befestigt. Das erste Befestigungselement der ersten abnehmbaren Abdeckung 20 ist durch eine Eichmarke 21 geschützt, die durch die Ausnehmung 19 in dem Lastkreuz 16 nach dem Öffnen des Gehäuses 11 des Wägemoduls 10 durch Abnahme der Lastplatte 12 vom Lastkreuz 16 sichtbar ist.

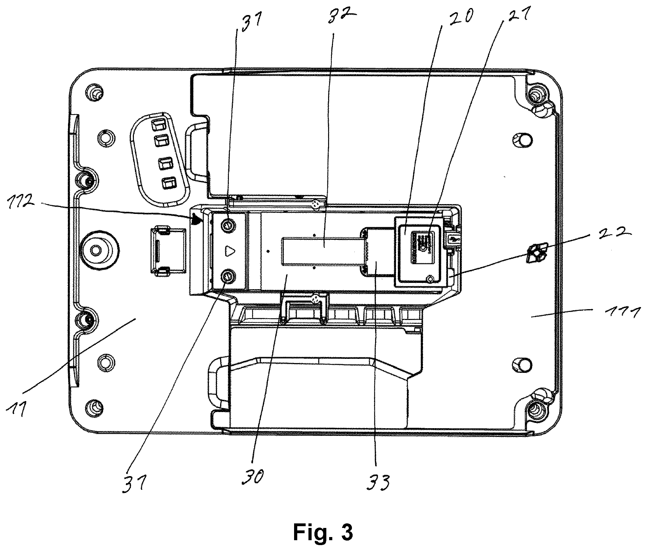

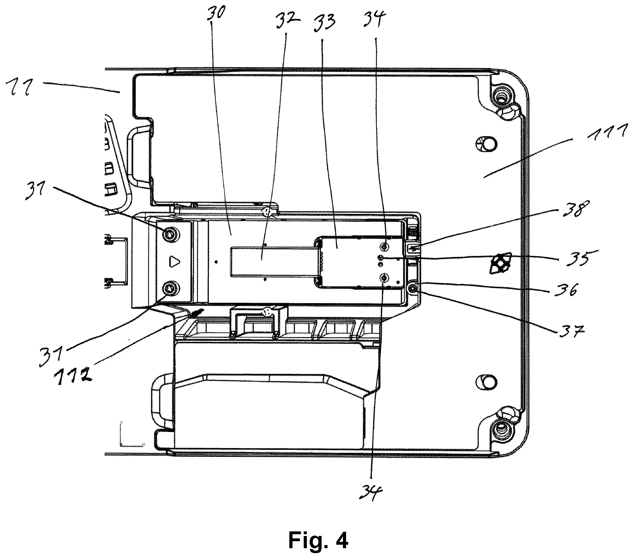

Fig. 3 und Fig. 4 zeigen das Wägemodul 10 in einer Ansicht von oben. Dabei ist zur besseren Übersicht das Lastkreuz nicht gezeigt. Im Standardbetrieb ist das Lastkreuz mit Schrauben 31 über die Befestigungseinrichtung 18 verschraubt, so dass nicht vorgesehen ist, dass das Lastkreuz 16 wie in Fig. 3 und Fig. 4 dargestellt abgenommen wird. In Fig. 3 ist in einem offenen Bereich 112 des Gehäuses 11 des Wägemoduls 10 die Wägezelle 30 gezeigt, die an ihrem beweglichen Abschnitt Schrauben 31 zur Aufnahme des Lastkreuzes umfasst. Das zu wiegende Gewicht wird an diesem beweglichen Abschnitt in die Wägezelle 30 eingeleitet. Die Wägezelle 30 umfasst einen Verformungsabschnitt, auf dem mindestens ein Dehnungsmesstreifen 32 angebracht ist. Die Wägezelle 30 ist mit ihrem festen Abschnitt mit dem Gehäuse 11 des Wägemoduls 10 verschraubt. Am festen Abschnitt ist eine Leiterplatte 33 in einer Vertiefung angebracht. Die Leiterplatte 33 umfasst eine Elektronik zur Verarbeitung des Signals des mindestens einen Dehnungsmessstreifens. Die Elektronik umfasst einen Speicher in dem eichrelevante Daten, insbesondere Kalibrierungsdaten der Wägezelle, und/oder ein Wert für die Erdbeschleunigung gespeichert sind. Die Leiterplatte 33 ist wie in Fig. 3 gezeigt durch eine erste abnehmbare Abdeckung 20 abgedeckt. Die erste abnehmbare Abdeckung 20 ist durch eine erste Befestigungsschraube an dem festen Abschnitt der Wägezelle 30 befestigt. Die erste Befestigungsschraube ist durch eine Eichmarke 21 abgedeckt. Die erste abnehmbare Abdeckung 20 weist einen Fortsatz 22 auf, der einen Schraubenkopf einer dritten Befestigungsschraube oberseitig abdeckt. Das Gehäuse 11 umfasst einen separaten Bauraum, der U-förmig um die Wägezelle 30 angeordnet ist, in dem verschiedene Module, wie zum Beispiel ein Netzteil und Verbindungskabel untergebracht sind. Dieser Bauraum ist durch eine Abdeckplatte 111 abgedeckt, auch wenn das Wägemodul 10 durch die abgenommene Lastplatte 12 nach oben hin offen ist.

Durch die Abdeckplatte 111 wird der offene Bereich 112 des Gehäuses, in dem sich die Wägezelle 30 befindet, nicht abgedeckt. Durch die Abdeckplatte 111 wird das Gehäuse 11 des Wägemoduls 10 nicht geschlossen. Fig. 4 zeigt das Wägemodul 10 mit abgenommener erster abnehmbarer Abdeckung. Die Leiterplattte 33 ist in dieser Ansicht komplett sichtbar. Die Leiterplatte ist mit zwei Schrauben 34 am festen Abschnitt der Wägezelle 30 verschraubt. Die Leiterplatte 33 ist mit einem USB Stecker 38 mit einem Kabel kontaktiert und gibt über das Kabel die Wägeergebnisse an die CPU-Einheit 4 der Ladenwaage 1 weiter. Die Leiterplatte 33 weist eine Bohrung 35 auf, durch die die erste Befestigungsschraube ragt, wenn mit der erste Befestigungsschraube die erste abnehmbare Abdeckung 20 am festen Teil der Wägezelle befestigt ist.

Die Leiterplatte 33 weist an ihrem longitudinalen Ende, welches sich am Ende des festen Abschnitts der Wägezelle 30 befindet, mindestens eine mit der Elektronik elektrisch verbundene Hardware-Schnittstellen auf. Durch die Hardware-Schnittstelle kann während der Herstellung der Wägezelle 30 oder während eines Eichvorgans durch einen Eichbeamten ein Abgleichen der Wägezelle 30 stattfinden. Insbesondere werden hierbei Kalibrierungsdaten der Wägezelle 30 in einem eichfähigen Speicher der Elektronik gespeichert, wobei anschließend ein elektronischer Schreibschutz aktiviert wird, um eine spätere unerlaubte Manipulation der Kalibrierungsdaten zu verhindern. Diese Hardware-Schnittstelle ist durch die erste abnehmbare Abdeckung abgedeckt.

Zusätzlich zu dieser Hardware-Schnittstelle ist eine zusätzliche Hardware-Schnittstelle vorhanden, bei er es sich um eine USB-Schnittstelle handelt, über die der von der Elektronik berechnete Gewichtswert von der CPU-Einheit 4 ausgelesen bzw. an dieses ausgegeben werden kann.

Die Anwesenheit der ersten Befestigungsschraube 40 kann von einer an der Unterseite der Leiterplatte 32 angebrachten, von der ersten abnehmbaren Abdeckung 20 von außen unzugänglich abgedeckten Lichtschranke erkannt werden. Hierzu sind der Sender und der Empfänger der Lichtschranke auf zwei aneinander gegenüberliegenden Seiten der in der Leiterplatte 33 ausgebildeten Bohrung 35 angeordnet, so dass durch die eingeschraubte erste Befestigungsschraube 40 die Lichtschranke unterbrochen wird. Die Lichtschranke ist derart ausgebildet, dass ein Schaltsignal erzeugt wird, wenn die Lichtschranke nicht mehr durch die Befestigungsschraube 40 unterbrochen ist, d.h. wenn die Befestigungsschraube 40 herausgeschraubt wird. Das Schaltsignal der Lichtschranke wird dafür verwendet, den vorstehend erläuterten elektronischen Schreibschutz des Speichers mit den Kalibrierungsdaten der Wägezelle 30 aufzuheben, wie es für eine zulässige Rekalibrierung der Wägezelle 30 erforderlich ist.

Fig. 4 zeigt den Schraubenkopf der dritte Befestigungsschraube 37 neben dem festen Abschnitt der Wägezelle 30. Die dritte Befestigungsschraube 37 ist in einem Halteelement einer zweiten abnehmbaren Abdeckung befestigt, wobei das Halteelement der zweiten abnehmbaren Abdeckung sich in einer rohrförmigen Öffnung des Gehäuses 11 des Wägemoduls 10 befindet und durch die dritte Befestigungsschraube 37 am oberen Ende 36 der rohrförmigen Öffnung 46 fixiert ist.

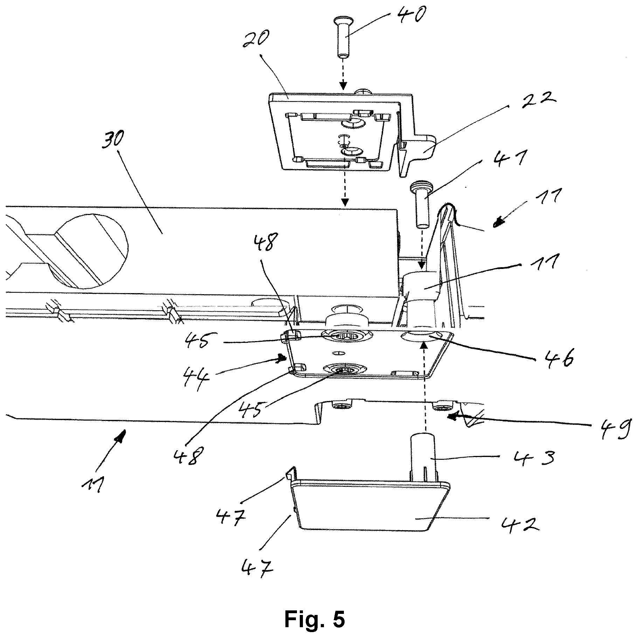

Fig. 5 zeigt eine Explosionszeichnung einer Schnittzeichnung durch das Wägemodul 10. Dabei ist dargestellt, wie die Wägezelle 30 mit ihrem festen Abschnitt mit zwei Schrauben 45 von unten an das Gehäuse 11 des Wägemoduls geschraubt ist. Dabei verlaufen die Schrauben 45 von unten, von außerhalb des Gehäuses 11, durch eine Öffnung im Gehäuse 11, nach innen und sind im festen Abschnitt der Wägezelle 30 verschraubt. Die Schraubenköpfe der Schrauben 45 sind außerhalb des Gehäuses 11 zugänglich. Um diese Zugänglichkeit zu unterbinden, ist im Bereich der Schrauben 45 am Gehäuse eine Vertiefung 44 vorgesehen, in die eine zweite abnehmbare Abdeckung 42 eingesteckt werden kann. Die zweite abnehmbare Abdeckung 42 ist mit einem Rastmechanismus 47, 48 in der Vertiefung 44 befestigt. Die zweite abnehmbare Abdeckung 42 besteht aus einer flachen Platte und einem zylindrischen Halteelement 43, welches im montierten Zustand in einer rohrförmigen Öffnung 46 des Gehäuses 11 des Wägemoduls 10 angebracht ist. Am inneren Ende 36 der rohrförmigen Öffnung 46 schliesst das Ende des zylindrischen Halteelements 43 mit der Rohrförmigen Öffnung bündig ab, wenn die zweite abnehmbare Abdeckung 42 in der Vertiefung 44 angebracht ist. Eine dritte Befestigungsschraube 41 ist von oben und longitudinal in das zylindrische Halteelement 43 geschraubt. Der Schraubenkopf der dritten Befestigungsschraube 41 steht am inneren Ende 36 der rohrförmigen Öffnung an und sichert die zweite abnehmbare Abdeckung 42 in der vorgesehenen Position. So können die Schrauben 45, die den festen Abschnitt der Wägezelle 30 am Gehäuse 11 halten, nur dann herausgedreht werden, wenn die dritte Befestigungsschraube 41 im inneren des Gehäuses 11 entfernt wird. Ist die erste abnehmbare Abdeckung 20 jedoch auf dem festen Abschnitt der Wägezelle 30 installiert, so deckt der Fortsatz 22 der ersten abnehmbaren Abdeckung 20 den Schraubenkopf der dritten Befestigungsschraube 41 ab und verhindert, dass diese entfernt wird. Da die erste abnehmbare Abdeckung 20 mit der ersten Befestigungsschraube 40 auf dem festen Abschnitt der Wägezelle 30 befestigt ist und durch die Eichmarke 21 gesichert ist, kann die dritte Befestigungsschraube 41 ebenfalls nicht gelöst werden, ohne die Eichmarke 21 zu zerstören. So kann mit einer Eichmarke 21 sowohl die Verschraubung 45 der Wägezelle 30 wie auch die Leiterplatte 33 mit deren Elektronik gesichert werden.

Bei einer geeichten Waage muss sichergestellt sein, dass die Verschraubung der Wägezelle 30 nicht gelöst wurde. Aus diesem Grund muss die Verschraubung ebenfalls mit einer Eichmarke gesichert sein. Da im Stand der Technik die Verschraubung der Wägezelle oft von oben und innerhalb des Gehäuses realisiert ist, kann die Verschraubung mit der Eichmarke und einer entsprechenden Abdeckung relativ einfach realisiert werden. Bei einer Verschraubung der Wägezelle von außen, wie in der erfinderischen Ladenwaage realisiert, ist eine Abdeckung der Verschraubung notwendig, die durch eine eigene Eichmarke gesichert werden muss. Eine unterhalb der Waage und außen am Gehäuse angebrachte Eichmarke zur Sicherung der Abdeckung der Schrauben unterhalb der Waage kann jedoch leicht beschädigt werden und kann so zu Problemen führen. Dies ist mit der vorgeschlagenen Konstruktion zur Sicherung der zweiten abnehmbaren Abdeckung von innen überwunden.

Die Funktionen verschiedener in den Zeichnungen gezeigter Elemente, inklusive der Funktionsblöcke, können durch dezidierte Hardware oder durch generische Hardware, die in der Lage ist, Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Waage (1), insbesondere Ladenwaage, mit einem Wägemodul (10), wobei das Wägemodul (10) ein Gehäuse (11) umfasst, in dem eine Wägezelle (30) untergebracht ist, wobei die Wägezelle (30) einen festen Abschnitt, einen Verformungsabschnitt und einen beweglichen Abschnitt umfasst, wobei der feste Abschnitt mit dem Gehäuse (11) verbunden, insbesondere verschraubt, ist und der bewegliche Abschnitt ein Lastkreuz (16) trägt, wobei das Gehäuse (11) im Bereich der Wägezelle (30) nach oben hin offen ist, wobei das Lastkreuz (16) eine Lastplatte (12) trägt, wobei das Gehäuse (11) durch die Lastplatte (12) und nach unten über den oberen Rand des Gehäuses ragende Ränder (15) der Lastplatte (12) geschlossen ist, wobei der Verformungsabschnitt mindestens einen Dehnungsmesstreifen (32) zur Messung eines auf die Lastplatte (12) wirkenden Gewichts aufweist, und wobei am festen Abschnitt der Wägezelle (30) eine Leiterplatte (33) mit einer Elektronik zur Verarbeitung des Signals des mindestens einen Dehnungsmessstreifens (32) angebracht ist, wobei die Elektronik einen Speicher umfasst, in dem eichrelevanten Daten, insbesondere Kalibrierungsdaten, der Wägezelle (30) und/oder ein Wert für die Erdbeschleunigung gespeichert sind, **dadurch gekennzeichnet, dass** eine erste abnehmbare Abdeckung (20) vorgesehen ist, die mittels eines durch eine Eichmarke (21) gesicherten ersten Befestigungselements (40), insbesondere einer ersten Befestigungsschraube (40), an dem festen Abschnitt der Wägezelle (30) befestigt ist und den Speicher der Leiterplatte (33) gegen die Manipulation von eichrelevanten Daten schützt.

2. Waage, insbesondere Ladenwaage, nach Anspruch 1, **dadurch gekennzeichnet, dass** die Wägezelle mit mindestens einem zweiten Befestigungselement, insbesondere mit mindestens einer zweiten Befestigungsschraube, mit ihrem festen Abschnitt am Gehäuse des Wägemoduls befestigt ist, wobei das mindestens eine zweite Befestigungselement, insbesondere die mindestens eine zweite Befestigungsschraube, durch eine zweite abnehmbare Abdeckung abgedeckt ist, wobei das mindestens eine zweite Befestigungselement, insbesondere die mindestens eine zweite Befestigungsschraube, von außerhalb des Gehäuses zugänglich und lösbar ist, falls die zweite abnehmbare Abdeckung abgenommen ist.

3. Waage, insbesondere Ladenwaage, nach Anspruch 2, **dadurch gekennzeichnet, dass** die zweite abnehmbare Abdeckung durch ein drittes Befestigungselement, insbesondere durch eine dritte Befestigungsschraube, innerhalb des Gehäuses am Gehäuse des Wägemoduls oder am festen Abschnitt der Wägezelle befestigt ist.

4. Waage, insbesondere Ladenwaage, nach Anspruch 3, **dadurch gekennzeichnet, dass** die erste abnehmbare Abdeckung das dritte Befestigungselement, insbesondere die dritte Befestigungsschraube, derart abdeckt, dass das dritte Befestigungselement, insbesondere die dritte Befestigungsschraube, nicht gelöst werden kann, wenn die erste abnehmbare Abdeckung nicht abgenommen ist.

5. Waage, insbesondere Ladenwaage, nach Anspruch 3 oder 4, **dadurch gekennzeichnet, dass** das mindestens eine zweite Befestigungselement, insbesondere die mindestens eine zweite Befestigungsschraube, auf einer Unterseite des Gehäuses des Wägemoduls durch eine Durchgangsöffnung das Gehäuse des Wägemoduls durchdringt und in einer Vertiefung des Gehäuses des Wägemoduls angebracht ist, wobei die zweite abnehmbare Abdeckung in der Vertiefung angebracht ist, wenn sie durch das dritte Befestigungselement am Gehäuse des Wägemoduls oder am festen Abschnitt der Wägezelle befestigt ist.

6. Waage, insbesondere Ladenwaage, nach einem der Ansprüche 3 bis 5, **dadurch gekennzeichnet, dass** die zweite abnehmbare Abdeckung aus einer flachen Platte besteht, an der ein längliches, insbesondere ein zylindrisches, Halteelement angebracht ist, wobei das längliche, insbesondere zylindrische, Halteelement der zweiten abnehmbaren Abdeckung in einem montierten Zustand in einer rohrförmigen Öffnung des Gehäuses des Wägemoduls angebracht ist und mit der dritten Befestigungsschraube in der rohrförmigen Öffnung fixiert ist.

7. Waage, insbesondere Ladenwaage, nach Anspruch 6, **dadurch gekennzeichnet, dass** die dritte Befestigungsschraube longitudinal in das zylindrische Halteelement der zweiten abnehmbaren Abdeckung geschraubt ist und der Schraubenkopf der dritten Befestigungsschraube einen Durchmesser aufweist, der größer ist als der Durchmesser der rohrförmigen Öffnung des Gehäuses des Wägemoduls und durch den Schraubenkopf ein Herausziehen des zylindrischen Halteelements aus der rohrförmigen Öffnung verhindert wird.

8. Waage, insbesondere Ladenwaage, nach einem der Ansprüche 1 bis 7, **dadurch gekennzeichnet, dass** der feste Abschnitt oberseitig eine Vertiefung aufweist, in die die Leiterplatte horizontal eingesetzt ist, und dass die Vertiefung zu dem festen Abschnitt der Wägezelle hin offen ist, wobei die erste abnehmbare Abdeckung von oben auf die Vertiefung des festen Abschnitts aufgesetzt ist und die Vertiefung und die Leiterplatte zumindest teilweise abdeckt, insbesondere so abdeckt, dass die Elektronik der zur Verarbeitung des Signals des mindestens einen Dehnungsmessstreifens und/oder der Speicher mit den eichrelevanten Daten nur nach Abnahme der ersten abnehmbaren Abdeckung zugänglich sind.

9. Waage, insbesondere Ladenwaage, nach einem der Ansprüche 3 bis 8, **dadurch gekennzeichnet, dass** die erste abnehmbare Abdeckung als plattenförmige Struktur ausgebildet ist, die zumindest teilweise auf dem festen Abschnitt der Wägezelle aufgebacht ist und einen Fortsatz aufweist, der das dritte Befestigungselement, insbesondere den Schraubenkopf der dritten Befestigungsschraube, oberseitig abdeckt.

10. Waage, insbesondere Ladenwaage, nach einem der Ansprüche 3 bis 8, **dadurch gekennzeichnet, dass** das mindestens eine zweite Befestigungselement, insbesondere die mindestens eine zweite Befestigungsschraube, und/oder das dritte Befestigungselement, insbesondere die dritte Befestigungsschraube, nicht durch eine separate Eichmarke gesichert sind.

11. Waage, insbesondere Ladenwaage, nach einem der Ansprüche 1 bis 8, **dadurch gekennzeichnet, dass** an der Leiterplatte eine Hardware-Schnittstelle vorgesehen ist, über die der Speicher zugreifbar ist und über die die in dem Speicher gespeicherten Kalibrierungsdaten und/oder der Wert für die Erdbeschleunigung änderbar sind, und wobei ein elektronischer Schreibschutz für den Speicher vorgesehen ist, wobei die Elektronik eine Schalteinrichtung umfasst, um den Schreibschutz des Speichers zu deaktivieren, und wobei die Schalteinrichtung nur nach Entnahme des ersten Befestigungselement, insbesondere der ersten Befestigungsschraube, und/oder nach Abnahme der ersten abnehmbaren Abdeckung betätigt werden und der Schreibschutz deaktiviert werden kann.

12. Waage, insbesondere Ladenwaage, nach Anspruch 11, **dadurch gekennzeichnet, dass** es sich bei der Schalteinrichtung um einen Sensor handelt, der dazu ausgebildet ist, ein Entfernen des ersten Befestigungselements aus seiner befestigten Stellung, insbesondere ein Herausschrauben der ersten Befestigungsschraube, zu erfassen und nach Erfassen eines Entfernens des ersten Befestigungselements ein Schaltsignal auszugeben, um den Schreibschutz des Speichers zu deaktivieren.

13. Waage, insbesondere Ladenwaage, nach Anspruch 12, **dadurch gekennzeichnet, dass** er Sensor eine Lichtschranke mit einem Sender und einem Empfänger ist, die derart angeordnet ist, dass der Strahlengang zwischen dem Sender und dem Empfänger unterbrochen ist, wenn sich das erste Befestigungselement in seiner befestigten Stellung befindet, und die dazu ausgebildet ist, ein Schaltsignal auszugeben, um den Schreibschutz des Speichers zu deaktivieren, wenn der Strahlengang zwischen dem Sender und dem Empfänger nicht mehr durch das erste Befestigungselement unterbrochen ist.

14. Waage, insbesondere Ladenwaage, nach einem der Ansprüche 1 bis 13, dass das Lastkreuz eine Ausnehmung aufweist, durch diese die Eichmarke nach dem Öffnen des Gehäuses des Wägemoduls durch Abnahme der Lastplatte vom Lastkreuz sichtbar ist.

15. Waage, insbesondere Ladenwaage, nach Anspruch 14, dass die Eichmarke und erste Befestigungselement durch die Ausnehmung im Lastkreuz zugänglich sind und entfernbar sind.

## Claims

1. Scales (1), in particular point-of-sale scales, having a weighing module (10), wherein the weighing module (10) comprises a housing (11) in which is accommodated a weighing cell (30), wherein the weighing cell (30) comprises a fixed portion, a deformation portion and a movable portion, wherein the fixed portion is connected, in particular screwed, to the housing (11) and the movable portion supports a load cross (16), wherein the housing (11) is open towards the top in the region of the weighing cell (30), wherein the load cross (16) supports a load plate (12), wherein the housing (11) is closed by the load plate (12) and towards the bottom by peripheries (15) of the load plate (12) that protrude beyond the upper periphery of the housing, wherein the deformation portion has at least one strain gauge (32) for measuring a weight acting on the load plate (12), and wherein a circuit board (33) having an electronics unit for processing the signal of the at least one strain gauge (32) is arranged on the fixed portion of the weighing cell (30), wherein the electronics unit comprises a memory in which are stored gauging-relevant data, in particular calibration data, of the weighing cell (30), and/or a value for gravitational acceleration, **characterized in that** provided is a first removable cover (30) which is fastened to the fixed portion of the weighing cell (30) by means of a first fastening element (40), in particular a first fastening screw (40), that is secured by means of a calibration mark (21), and which protects the memory of the circuit board (33) against manipulation of gauging-relevant data.

2. Scales, in particular point-of-sale scales, according to Claim 1, **characterized in that** the weighing cell by way of the fixed portion thereof is fastened to the housing of the weighing module by at least one second fastening element, in particular by at least one second fastening screw, wherein the at least one second fastening element, in particular the at least one second fastening screw, is covered by a second removable cover, wherein the at least one second fastening element, in particular the at least one second fastening screw, is accessible and releasable from outside the housing if the second removable cover is removed.

3. Scales, in particular point-of-sale scales, according to Claim 2, **characterized in that** the second removable cover is fastened within the housing to the housing of the weighing module or to the fixed portion of the weighing cell by a third fastening element, in particular by a third fastening screw.

4. Scales, in particular point-of-sale scales, according to Claim 3, **characterized in that** the first removable cover covers the third fastening element, in particular the third fastening screw, in such a manner that the third fastening element, in particular the third fastening screw, cannot be released if the first removable cover has not been removed.

5. Scales, in particular point-of-sale scales, according to Claim 3 or 4, **characterized in that** the at least one second fastening element, in particular the at least one second fastening screw, on a lower side of the housing of the weighing module penetrates the housing of the weighing module through a passage opening and is arranged in a depression of the housing of the weighing module, wherein the second removable cover is arranged in the depression when said second removable cover is fastened to the housing of the weighing module or to the fixed portion of the weighing cell by the third fastening element.

6. Scales, in particular point-of-sale scales, according to one of Claims 3 to 5, **characterized in that** the second removable cover is composed of a flat plate on which is arranged an elongate, in particular a cylindrical, holding element, wherein the elongate, in particular cylindrical, holding element of the second removable cover in an assembled state is arranged in a tubular opening of the housing of the weighing module and is fixed in the tubular opening by the third fastening screw.

7. Scales, in particular point-of-sale scales, according to Claim 6, **characterized in that** the third fastening screw is screwed longitudinally into the cylindrical holding element of the second removable cover, and the screw head of the third fastening screw has a diameter that is larger than the diameter of the tubular opening of the housing of the weighing module, and extracting the cylindrical holding element from the tubular opening is prevented by the screw head.

8. Scales, in particular point-of-sale scales, according to one of Claims 1 to 7, **characterized in that** the fixed portion on the upper side has a depression into which the circuit board is horizontally inserted, and **in that** the depression is open towards the fixed portion of the weighing cell, wherein the first removable cover is placed from above onto the depression of the fixed portion and at least partially covers the depression and the circuit board, in particular covers said depression and said circuit board in such a manner that the electronics unit for processing the signal of the at least one strain gauge and/or the memory with the gauging-relevant data are/is accessible only upon removal of the first removable cover.

9. Scales, in particular point-of-sale scales, according to one of Claims 3 to 8, **characterized in that** the first removable cover is configured as a plate-shaped structure which is at least partially attached to the fixed portion of the weighing cell and has an appendage which covers the third fastening element, in particular the screw head of the third fastening screw, on the upper side.

10. Scales, in particular point-of-sale scales, according to one of Claims 3 to 8, **characterized in that** the at least one second fastening element, in particular the at least one second fastening screw, and/or the third fastening element, in particular the third fastening screw, are/is not secured by a separate calibration mark.

11. Scales, in particular point-of-sale scales, according to one of Claims 1 to 8, **characterized in that** provided on the circuit board is a hardware interface by way of which the memory is accessible, and by way of which the calibration data stored in the memory and/or the value for gravitational acceleration are able to be altered, and wherein an electronic write protection for the memory is provided, wherein the electronics unit comprises a switching device for deactivating the write protection of the memory, and wherein the switching device can be activated and the write protection deactivated only upon retrieval of the first fastening element, in particular the first fastening screw, and/or upon removal of the first removable cover.

12. Scales, in particular point-of-sale scales, according to Claim 11, **characterized in that** the switching device is a sensor which is configured to detect removal of the first fastening element from its fastened position, in particular unscrewing of the first fastening screw, and upon detecting removal of the first fastening element to emit a switching signal in order to deactivate the write protection of the memory.

13. Scales, in particular point-of-sale scales, according to Claim 12, **characterized in that** the sensor is a light barrier, having a transmitter and a receiver, which is disposed in such a manner that the beam path between the transmitter and the receiver is interrupted when the first fastening element is in its fastened position, and which is configured to emit a switching signal in order to deactivate the write protection of the memory when the beam path between the transmitter and the receiver is no longer interrupted by the first fastening element.

14. Scales, in particular point-of-sale scales, according to one of Claims 1 to 13, **characterized in that** the load cross has a clearance through which the calibration mark is visible upon opening the housing of the weighing module by removing the load plate from the load cross.

15. Scales, in particular point-of-sale scales, according to Claim 14, **characterized in that** the calibration mark and first fastening element are accessible and can be removed through the clearance in the load cross.

## Revendications

1. Balance (1), notamment balance de magasin, avec un module de pesage (10), le module de pesage (10) comprenant un boîtier (11) dans lequel est montée une cellule de pesage (30), la cellule de pesage (30) comprenant une section fixe, une section de déformation et une section mobile, la section fixe étant reliée au boîtier (11), notamment vissée, et la section mobile portant une croix de charge (16), le boîtier (11) étant ouvert vers le haut dans la zone de la cellule de pesage (30), la croix de charge (16) portant une plaque de charge (12), le boîtier (11) étant fermé par la plaque de charge (12) et par des bords (15) de la plaque de charge (12) dépassant vers le bas au-delà du bord supérieur du boîtier, la section de déformation présentant au moins une jauge de contrainte (32) pour mesurer un poids agissant sur la plaque de charge (12), et une carte de circuit imprimé (33) avec une électronique pour le traitement du signal de l'au moins une jauge de contrainte (32) étant montée sur la section fixe de la cellule de pesage (30), l'électronique comprenant une mémoire dans laquelle sont enregistrées des données pertinentes pour l'étalonnage, notamment des données de calibrage, de la cellule de pesage (30) et/ou une valeur pour l'accélération de la pesanteur, **caractérisée en ce qu'**il est prévu un premier couvercle retirable (20) qui est fixé à la section fixe de la cellule de pesage (30) au moyen d'un premier élément de fixation (40) sécurisé par une marque d'étalonnage (21), notamment d'une première vis de fixation (40), et qui protège la mémoire de la carte de circuit imprimé (33) contre la manipulation de données pertinentes pour l'étalonnage.

2. Balance, notamment balance de magasin, selon la revendication 1, **caractérisée en ce que** la cellule de pesage est fixée par sa section fixe au boîtier du module de pesage avec au moins un deuxième élément de fixation, notamment avec au moins une deuxième vis de fixation, l'au moins un deuxième élément de fixation, notamment l'au moins une deuxième vis de fixation, étant recouvert par un deuxième couvercle retirable, l'au moins un deuxième élément de fixation, notamment l'au moins une deuxième vis de fixation, étant accessible et amovible depuis l'extérieur du boîtier si le deuxième couvercle retirable est retiré.

3. Balance, notamment balance de magasin, selon la revendication 2, **caractérisée en ce que** le deuxième couvercle retirable est fixé au boîtier du module de pesage ou à la section fixe de la cellule de pesage par un troisième élément de fixation, notamment par une troisième vis de fixation, à l'intérieur du boîtier.

4. Balance, notamment balance de magasin, selon la revendication 3, **caractérisée en ce que** le premier couvercle retirable recouvre le troisième élément de fixation, notamment la troisième vis de fixation, de telle sorte que le troisième élément de fixation, notamment la troisième vis de fixation, ne peut pas être desserré lorsque le premier couvercle retirable n'est pas retiré.

5. Balance, notamment balance de magasin, selon la revendication 3 ou 4, **caractérisée en ce que** l'au moins un deuxième élément de fixation, notamment l'au moins une deuxième vis de fixation, sur un côté inférieur du boîtier du module de pesage, traverse le boîtier du module de pesage à travers une ouverture traversante et est monté dans un renfoncement du boîtier du module de pesage, le deuxième couvercle retirable étant monté dans le renfoncement lorsqu'il est fixé au boîtier du module de pesage ou à la section fixe de la cellule de pesage par le troisième élément de fixation.

6. Balance, notamment balance de magasin, selon l'une quelconque des revendications 3 à 5, **caractérisée en ce que** le deuxième couvercle retirable est constitué d'une plaque plane sur laquelle est monté un élément de retenue allongé, notamment cylindrique, l'élément de retenue allongé, notamment cylindrique, du deuxième couvercle retirable étant monté, à l'état assemblé, dans une ouverture tubulaire du boîtier du module de pesage et étant fixé dans l'ouverture tubulaire avec la troisième vis de fixation.

7. Balance, notamment balance de magasin, selon la revendication 6, **caractérisée en ce que** la troisième vis de fixation est vissée longitudinalement dans l'élément de retenue cylindrique du deuxième couvercle retirable et la tête de vis de la troisième vis de fixation présente un diamètre qui est supérieur au diamètre de l'ouverture tubulaire du boîtier du module de pesage et la tête de vis empêche l'élément de retenue cylindrique de sortir de l'ouverture tubulaire.

8. Balance, notamment balance de magasin, selon l'une quelconque des revendications 1 à 7, **caractérisée en ce que** la section fixe présente sur le côté supérieur un renfoncement dans lequel la carte de circuit imprimé est insérée horizontalement, et **en ce que** le renfoncement est ouvert vers la section fixe de la cellule de pesage, le premier couvercle retirable étant placé par le haut sur le renfoncement de la section fixe et recouvrant au moins partiellement le renfoncement et la carte de circuit imprimé, notamment les recouvrant de telle sorte que l'électronique pour le traitement du signal de l'au moins une jauge de contrainte et/ou la mémoire avec les données pertinentes pour l'étalonnage ne soient accessibles qu'après retrait du premier couvercle retirable.

9. Balance, notamment balance de magasin, selon l'une quelconque des revendications 3 à 8, **caractérisée en ce que** le premier couvercle retirable est réalisé sous forme de structure en forme de plaque qui est au moins partiellement montée sur la section fixe de la cellule de pesage et qui présente un prolongement qui recouvre le troisième élément de fixation, notamment la tête de vis de la troisième vis de fixation, sur le côté supérieur.

10. Balance, notamment balance de magasin, selon l'une des revendications 3 à 8, **caractérisée en ce que** l'au moins un deuxième élément de fixation, notamment l'au moins une deuxième vis de fixation, et/ou le troisième élément de fixation, notamment la troisième vis de fixation, ne sont pas sécurisés par une marque d'étalonnage séparée.

11. Balance, notamment balance de magasin, selon l'une des revendications 1 à 8, **caractérisée en ce qu'**il est prévu sur la carte de circuit imprimé une interface matérielle par l'intermédiaire de laquelle on peut accéder à la mémoire et par l'intermédiaire de laquelle les données de calibrage et/ou la valeur pour l'accélération de la pesanteur enregistrées dans la mémoire peuvent être modifiées, et une protection en écriture électronique étant prévue pour la mémoire, l'électronique comprenant un dispositif de commutation pour désactiver la protection en écriture de la mémoire, et le dispositif de commutation ne pouvant être actionné et la protection en écriture ne pouvant être désactivée qu'après l'enlèvement du premier élément de fixation, notamment de la première vis de fixation, et/ou après le retrait du premier couvercle retirable.

12. Balance, notamment balance de magasin, selon la revendication 11, **caractérisée en ce que** le dispositif de commutation consiste en un capteur configuré pour détecter un enlèvement du premier élément de fixation de sa position fixée, notamment un dévissage de la première vis de fixation, et pour émettre un signal de commutation après détection d'un enlèvement du premier élément de fixation, afin de désactiver la protection en écriture de la mémoire.

13. Balance, notamment balance de magasin, selon la revendication 12, **caractérisée en ce que** le capteur est une barrière lumineuse avec un émetteur et un récepteur, qui est agencée de telle sorte que le trajet du faisceau entre l'émetteur et le récepteur est interrompu lorsque le premier élément de fixation se trouve dans sa position fixée, et qui est configurée pour émettre un signal de commutation afin de désactiver la protection en écriture de la mémoire lorsque le trajet du faisceau entre l'émetteur et le récepteur n'est plus interrompu par le premier élément de fixation.

14. Balance, notamment balance de magasin, selon l'une quelconque des revendications 1 à 13, **caractérisée en ce que** la croix de charge présente un évidement à travers lequel la marque d'étalonnage est visible après l'ouverture du boîtier du module de pesage par retrait de la plaque de charge de la croix de charge.

15. Balance, notamment balance de magasin, selon la revendication 14, **caractérisée en ce que** la marque d'étalonnage et le premier élément de fixation sont accessibles et peuvent être enlevés à travers l'évidement dans la croix de charge.
